# EUROPEAN PATENT SPECIFICATION

(11) **EP 2 196 048 B1**
(45) Date of publication and mention of the grant of the patent: **19.11.2014**
(21) Application number: 07852279.4
(22) Date of filing: 14.12.2007
(51) Int. Cl.: H04W 24/00

(54) **TERMINAL TRACE ACTIVATION IN A WIRLESS COMMUNICATIONS NETWORK**
ENDGERÄTE-TRACE-AKTIVIERUNG IN EINEM DRAHTLOSEN KOMMUNIKATIONSNETZ
ACTIVATION DE SUIVI DE TERMINAL DANS UN RÉSEAU DE COMMUNICATION SANS FIL

(30) Priority: 05.10.2007 US 977794 P
(43) Date of publication of application: 16.06.2010
(73) Proprietor: Telefonaktiebolaget LM Ericsson (publ), 164 83 Stockholm (SE)
(72) Inventor: KENEHAN, Noel, S-113 49 Stockholm (SE); POWER, John, Kilmacthomas Co. Waterford (IE)
(74) Representative: Forsberg, Ulrika S.
(86) International application number: PCT/SE2007/051008
(87) International publication number: WO 2009/045138

(56) References cited:
- WO-A1-2008/105687
- WO-A1-2008/105689
- US-A1- 2006 217 154
- US-A1- 2007 226 701
- "Digital cellular telecommunications system (Phase 2+); Universal Mobile Telecommunications System (UMTS); Telecommunication management; Subscriber and equipment trace; Trace control and configuration management (3GPP TS 32.422 version 7.2.0 Release 7); ETSI TS 132 422", IEEE, LIS, SOPHIA ANTIPOLIS CEDEX, FRANCE, vol. 3-SA5, no. V7.2.0, 1 June 2007 (2007-06-01), XP014038357, ISSN: 0000-0001
- CATT: "Discussion on trace function in LTE", 3GPP DRAFT; R3-071233, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG CN, no. Sophia; 20070607, 7 June 2007 (2007-06-07), XP050020528, [retrieved on 2007-06-07]
- ERICSSON: "Subscriber and equipment trace for LTE", 3GPP DRAFT; R3-070914, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kobe, Japan; 20070502, 2 May 2007 (2007-05-02), XP050161798, [retrieved on 2007-05-02]
- ERICSSON: "Introduction of Subscriber and equipment trace for LTE", 3GPP DRAFT; R3-071516, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20070815, 15 August 2007 (2007-08-15), XP050162336, [retrieved on 2007-08-15]
- 'Technical Specification Group Services and System Aspects; Telecommunication management; Subscriber and equipment trace; Trace control and configuration managemetn (Release 6), 32.422 V6.5.0' 3RD GENERATION PARTERNSHIP PROJECT December 2005, pages 1 - 43
- 'Technical Specification Group Radio Access Network; 3GPP TS 32.421 V6.7.0' 3RD GENERATION PARTNERSHIP PROJECT June 2005, pages 1 - 22

## Description

### Technical Field

The present invention relates to methods and arrangements in a mobile telecommunications network, and in particular to a signaling based activation of terminal trace via an evolved Node B (eNode B) from a Radio access network domain manager (RAN DM) in a radio access network comprising a plurality of eNode Bs connected directly to the core network (CN).

### Background

UTRAN (Universal terrestrial radio access network) is a term that identifies the radio access network of a UMTS (Universal Mobile Telecommunication System), wherein the UTRAN consists of Radio Network Controllers (RNCs) and Node Bs (i.e. radio base stations). The Node Bs communicates wirelessly with mobile terminals and the RNCs control the Node Bs. The RNCs are further connected to the Core Network (CN). Evolved UTRAN (eUTRAN) is an evolution of the UTRAN towards a high-data rate, low-latency and packet-optimised radio access network. Further the eUTRAN does only consist of eNode Bs (evolved Node Bs), and the eNode Bs are interconnected and further connected to the CN. eUTRAN is also being referred to as Long Term Evolution (LTE).

In some situations, operation and maintenance functionality of the radio access network requires information regarding a specific terminal. Hence it may be desired to trace a sequence of events of this specific terminal in relation to the access network. In order to be able to receive this information, the operation and maintenance functionality must be able to trace the terminal.

In the existing UTRAN , the operation and maintenance functionality is aware of in which Radio Access Network (RAN) it is desired to activate traces upon entry of the terminal that is desired to trace. Further it is also known which radio network controllers (RNC) belong to this RAN. Thus, the operation and maintenance functionality sends a request for a trace to the relevant RNCs, and makes the RNCs responsible for the trace. The RNC is aware of IMSI (International Mobile Subscriber Identity) and can therefore take care of all trace requests where the terminal is identified by the IMSI. However, the operation and maintenance functionality may use the IMEI(SV) (International Mobile Equipment Identity) to identify the terminals but the RNCs are not aware of the IMEI(SV). The IMEI identifies the mobile terminal and the IMEI(SV) also includes information on the origin, model, and serial number of the mobile terminal. Therefore, each RNC of the RAN has to communicate with the core network (CN) that is aware of the IMEI(SV) when the IMEI or IMEI(SV) is used for identifying the terminal. When the RNCs have received information from the CN of the IMEI or the IMEI such that it can identify the terminal to be traced, the RNC activate the trace locally on the RNC. The trace mechanisms of prior art do not allow for spreading of the trace to any other nodes. The prior art trace mechanism is further described in the 3GPP TS 32.422. In TS 32.422 the term Element Manager (EM) is used for the entity which in this specification is denoted DM (Domain Manager).

The existing architecture of networks denoted Long Term Evolution (LTE) is described in the early versions of the 3GPP TS 32.421/2/3 documents for Release 8 of the 3GPP specifications. These documents describe an interface between the RAN DM and the Core Network DM which is a P2P (peer-to-peer) connection which is in the initial stages of standardization. However, it is desired to achieve the activation of the terminal trace from the RAN DM towards an eNode B interface since the interface between the eNode B and the RAN DM is easier to manage than the interface between the CN and the RAN DM. The RAN DM provides a package of operator functions for management of a set of closely related types of network elements. In LTE, there exists no RNC, and the operation and maintenance functionality, referred to as RAN DM, has no knowledge where in the network the terminal to be traced is located. It only knows in which CN it is desired to activate traces. As in the UTRAN, the RAN DM identifies the terminals by the IMSI and the eNodeB (i.e. an RBS in a LTE network) are not aware of the IMSI identity.

Due to the fact that the IMSI is not available in the eNodeB the subscriber or terminal trace must be activated via signaling based activation from the CN. Further, the CN needs to be triggered to start the trace of a subscriber or terminal.

As stated above, the UTRAN prior art makes it necessary to contact every RNC within a RAN to enable the trace on that RAN. This is acceptable for UTRAN that may include up to 10 RNCs. However in LTE where there exist no RNCs there may be up to 5000 Node Bs. That would cause very heavy load on the system if it is required to contact each Node B every time a terminal trace needs to be initiated.

Further, the UTRAN prior art has a geographical area for the activation of a terminal trace. This geographical area is based on the RNCs which no longer exist in the LTE system.

Moreover, the solution according to the UTRAN prior art is designed for a radio network comprising RNCs, and not for a radio network with only eNodeBs. Also, the solution of the UTRAN prior art does not handle the case when there is no permanent identity for the UE. In UTRAN it is assumed that the IMSI is available in the RNC but in the eUTRAN the IMSI is not allowed to be available in the eNode B due to security reasons.

The article "Discussion on trace function in LTE" (3GPP DRAFT; R3-071233) discusses some possible methods to implement the trace function in LTE and how to deactivate a trace session.

### Summary

The object of the present invention is to provide an efficient mechanism for activating a terminal trace in a mobile communications network, comprising a plurality of radio base stations (e.g. eNode Bs) directly connected to a core network, such as the eUTRAN.

The basic idea of the present invention is to allow for the activation of a terminal trace which needs to be activated in the Core Network from a RAN DM through a first eNodeB that is selected independently of the location of the terminal to be traced. The first eNode B forwards the trace request to the CN and the CN stores information relating to the trace request in a global manner such that the trace request may be sent to any eNode B that is being controlled by said CN node. Since the CN stores the trace information in the global manner the trace may be activated on any eNode B that is connected to said CN, which implies that the trace request can be sent to any of the eNode Bs of the CN.

According to a first aspect of the present invention, a RAN DM is provided that comprises means for selecting a first eNode B independently of the location of the terminal to be traced and means for sending a request comprising the first terminal identity for the terminal to be traced to the first eNodeB. The terminal trace request is then forwarded to a CN node, which CN node is arranged to store information relating to the trace request in a global manner and to control the first eNode B and a second eNode B that is controlling the terminal to be traced.

According to a second aspect of the present invention a CN node is provided. The CN node comprises means for receiving a terminal trace request for the terminal to be traced from a RAN DM via a first eNodeB that is selected independently of the location of the terminal to be traced. It further comprises a trace information storage configured to globally store terminal trace related information such that a trace can be activated on any eNode B that is connected to said CN node, means for receiving an identity of a second eNode B that is controlling the terminal to be traced, and means for sending the terminal trace request to the second eNodeB, such that the second eNode B can perform the terminal trace.

According to further aspects of the present invention methods are provided comprising the steps of sending a request for the terminal to be traced from the RAN DM to a first eNodeB that is selected independently of the location of the terminal to be traced, forwarding the request from the first eNodeB to a CN node, receiving in the CN node a terminal trace request for the terminal to be traced from a RAN DM via a first eNodeB that is selected independently of the location of the terminal to be traced, storing terminal trace related information globally such that a trace can be activated on any eNode B that is connected to said CN node, receiving an identity of a second eNode B that is controlling the terminal to be traced, and sending the terminal trace request to the second eNodeB, such that the second eNode B can perform the terminal trace.

An advantage with the present invention is that it allows for activation of a terminal trace on all eNode Bs which are connected to a single CN by signaling only one eNode B. This is in contrast to the prior art where signaling to every eNodeB would be required, which would cause much load in the network as there may be thousands of eNodeBs connected to one CN node.

A further advantage with the present invention is that it allows for the terminal trace to be easily activated by a single signal on a very large geographical area. In the UTRAN prior art solution it was only possible to activate the trace on one RNC at a time. The RNC usually controls around 500 Node Bs. The area covered by 500 Node Bs is a limited area to initiate a terminal trace in a city or commuter belt around a city where people travel large distances in a short time and with Node Bs that are located closely together. Hence, the present invention allows the activation of the trace on a very large area which is covered by a full CN node. A full CN node may cover an entire city in itself and may contain several thousand eNode Bs.

A further advantage with the present invention is that the trace files are stored and managed in one DM. This gives the operator a very easy and intuitive way to use the terminal trace.

A further advantage is that the eUTRAN activation of the terminal trace is made possible without the use of P2P (Peer-to-peer) connection between the Core Network DM and the RAN DM.

A yet further advantage is that the present invention allows for easy invocation of a terminal trace from a RAN in a multi-vendor environment.

### Brief description of the drawings

Exemplifying embodiments of the invention will now be described in more detail with reference to the accompanying schematic drawings.
Fig. 1 is a schematically illustration of a network wherein the present invention may be implemented.
Fig. 2 shows flow charts illustrating methods according to embodiments of the present invention.
Fig. 3 is a block diagram schematically illustrating an embodiment of the present invention.

### Detailed description

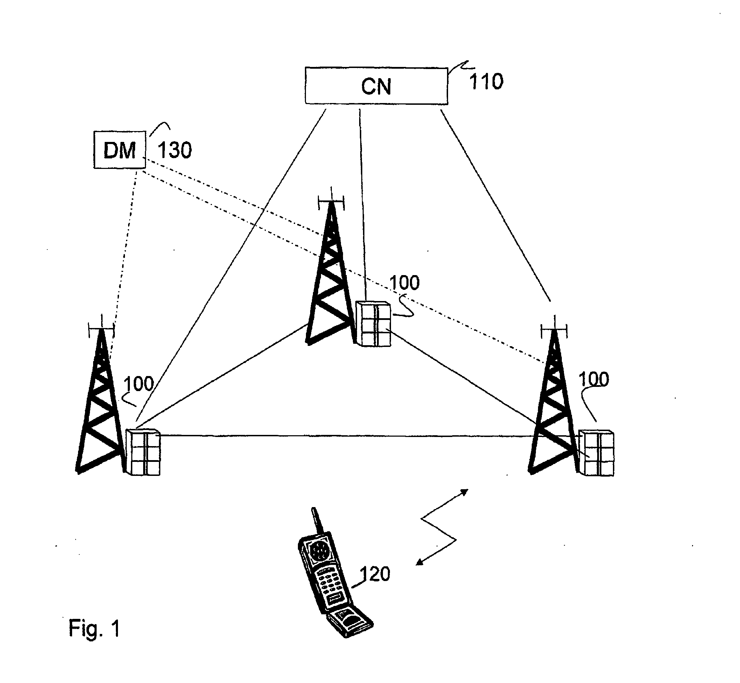

The present invention relates to mechanisms for activation of a terminal trace in a radio access network comprising radio base stations 100 directly connected to a CN 110 which is illustrated in **figure 1****.** The terminal 120 to be traced communicates wirelessly with one or more of the radio base stations 100. The radio access network may be an LTE (i.e. eUTRAN) based radio access network. The terminal trace is activated by means of a RAN DM 130 which is an interface for operators towards the radio access network nodes of the LTE network. I.e. the operators use the RAN DM to manage the network including asking for a specific terminal to be traced. The RAN DM may also be referred to as an eUTRAN DM.

The basic idea of the present invention is to allow for activation of a terminal trace which needs to be activated in the CN from a RAN DM through a first eNodeB that is selected independently of the location of the terminal to be traced. This selection may be performed during a pre-configuration.

The operator initiates a terminal trace via the RAN DM and the RAN DM signals a terminal trace request message to the first eNodeB to initiate the terminal trace with the subscriber's (i.e. the subscriber of the terminal to be traced) permanent identity (e.g. the IMSI). This permanent identity is also referred to as a first terminal identity.

The first eNodeB is configured to act as a router and transparently forwards the terminal trace request message to a CN node, e.g. the Mobility Management Entity (MME) via a control plane signaling (e.g. via the S1 interface). The CN node comprises means for receiving the terminal trace request and for storing the trace information associated with the trace request. The trace information is stored globally in the CN node which implies that the trace request can be activated on any eNode B that is connected to the CN.

When the terminal to be traced performs a call setup, the CN node can identify the eNode B that is controlling the terminal to be traced referred to as the second eNode B. Since the trace information is stored globally within the CN node, this trace information can be used for any eNode B connected to the CN node according to the present invention. I.e. when the CN node has received a call setup message from the UE such as an initial UE context message it responds to the UE via the second eNode B and piggybacking the response message with trace information comprising a second terminal identity that can be used by the eNode B. The second terminal identity, e.g. a trace reference is obtained by the CN node either from the RAN DM or the second identity is created in the CN. Thus, the CN node comprises trace information storage, means for identifying the eNode B that is controlling the terminal to be traced and means for sending the trace request to the identified second eNode B. It should be noted that the CN node can send the trace request to any eNode B that is being controlled by the CN node thanks to the global storage of the trace information in the CN node.

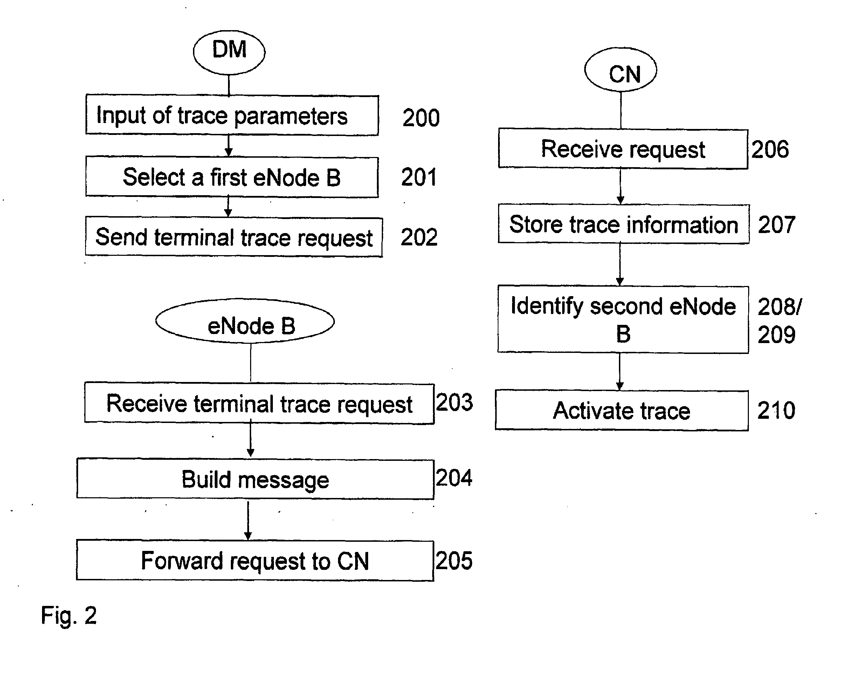

Turning now to **figure 2** showing a flowchart of a method according to an embodiment of the present invention.

Step 200. Operator inputs trace configuration parameters i.e. UE/subscriber identity, level of tracing to be configured etc. It may be an option for the operator to manually enter the second identity if not the RAN DM creates second identity. This second identity may hence be included in the trace configuration parameters which are sent to the first eNode B.

Step 201.The RAN DM selects a first eNodeB that is connected to the Core Network(CN) node(s) that the terminal trace should be initiated on. (One or more MMEs may be selected to turn on a UE/Subscriber trace, which implies that a plurality of first eNode Bs may be selected if the plurality of first eNode Bs belong to different CNs). The selected first eNodeB has to be connected to the same CN(s) as the terminal to be traced but the selection is made independently of the location of said terminal. (It should be noted that the first eNode B may be connected to more than one CNs.) The RAN DM may perform this selection in many ways. E.g. by manually entering one or more eNodeBs per CN node or by dynamically scanning all eNodeBs and select one at random for each CN node or one eNode B for several MMEs etc.

Step 202. The RAN DM sends a request for terminal trace to the selected first eNodeB with the trace information necessary for the activation of the signaling based terminal trace in the Core Network, comprising the first terminal identity or the first and the second identity.

Step 203. The first eNodeB receives the request for the terminal tracing from the RAN DM. The protocol over which this message is sent is not relevant to this invention but it may be a standardized 3GPP protocol or a proprietary protocol. Which ever protocol is selected will have a termination point which will receive the message and decode the information. This termination point will decode the message and forward it to a part of the first eNodeB which can build an S1 message.

Step 204. The first eNodeB will then build the S1 message which will convey the trace information, i.e. the first terminal identity or the first and second identity (and other parameters), that it has received from the RAN DM. This message may be a message similar to the RANAP "Uplink Information Exchange Request" message or any similar message which can carry the information on the interface to the CN nodes to which it is connected. It should be noted that trace information is also being referred to as trace configuration parameters.

Step 205. The first eNodeB will then send the message similar to the RANAP "Uplink Information Exchange Request" message to all attached CN nodes over an interface (S1 in the case of LTE). This message will contain the trace information which was received from the RAN DM as described above.

Step 206. The CN node receives the message containing the trace information. As stated above, the trace information comprises either the first terminal identity or the first terminal identity and the second identity. If the trace information only comprises the first terminal identity, the second identity is created in the CN. The CN node may respond with an acknowledgement for reception of the request. (Not shown.)

Step 207. The CN node then stores the trace information globally in a trace information storage, which implies that a terminal trace may be activated on any eNode B connected to said CN node. I.e. a terminal trace may be performed for a terminal independently on which eNode B that it is covered by. This may be done by storing the trace parameters in the User Equipment (UE) context register within the CN node. As stated above the CN node is preferably a MME and the terminal trace can hence be activated on the entire MME.

Step 208. The terminal to be traced performs a call setup via the eNodeB which currently is controlling said terminal. This eNode B is referred to as a second eNode B.

Step 209. The CN node receives the initial UE context message. From this message the CN node identifies the second eNode B that is controlling the terminal to be traced.

Step 210. The CN node checks the trace information storage area to see if the terminal has a trace initiated. When it finds the answer to be yes, the trace is activated by sending the second identity and other trace configuration data from the CN node to the second eNodeB by piggy backing the trace configuration data on an initial message which is sent to the terminal during the call setup e.g. on SAE BEARER SETUP or INITIAL UE CONTEXT REQUEST. (I.e. the trace is now like a normal Signaling Based Activation UE or Subscriber Trace).

The second eNode B receives the trace configuration data and starts the subscriber or equipment trace as per the prior art.

The eNode B may spread the trace configuration data to other eNode Bs if the terminal is mobile and is handed over to another eNode B.

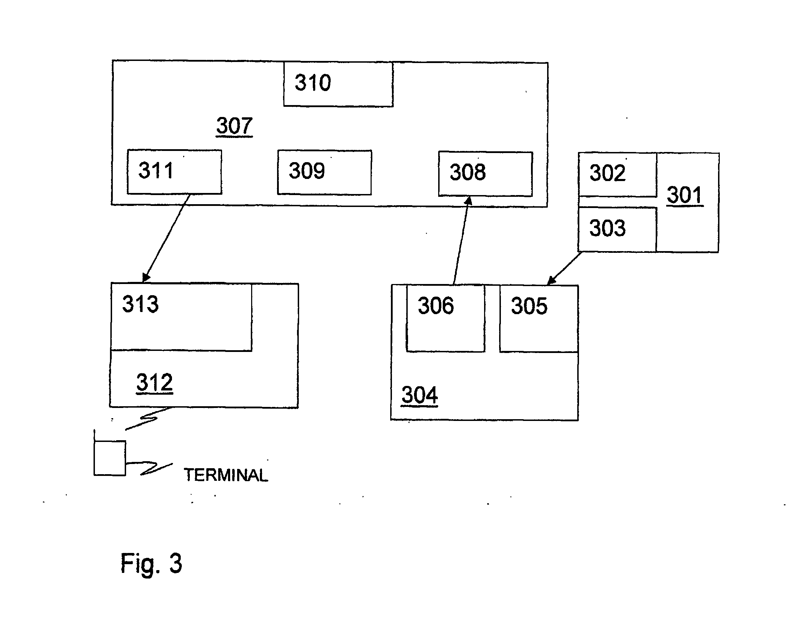

Turning now to figure 3 illustrating the arrangements of an embodiment of the present invention that is configured to initiate a terminal trace. Thus the RAN DM 301 comprises means for selecting 302 a first eNode B independently of the location of the terminal to be traced and means for sending 303 a request, comprising at least the first terminal identity for the terminal to be traced, to the first eNodeB.

The first eNode B 304 comprises means for receiving 305 the terminal trace request and means for forwarding 306 said request.

Further, the CN node 307 comprises means for receiving 308 a request for the terminal to be traced from the RAN DM via the first eNodeB that is selected independently of the location of the terminal to be traced. It further comprises means for receiving 309 an identity of a second eNode B that is controlling the terminal to be traced and a trace information storage 310 configured to globally store trace information such that a trace may be activated on any eNode B connected to the CN. Moreover, the CN node comprises means for sending 311 the terminal trace request comprising a second terminal identity to the second eNodeB, such that the second eNode B can perform the terminal trace, wherein the second eNode B may be any eNode B that is controlled by the CN node. It should be noted that the first terminal identity is unknown by the eNode Bs whereas the second terminal identity can be used by the eNodeBs. The second identity of the terminal to be traced may either be obtained from the RAN DM or created in the CN.

The second eNode B 312 that is controlling the terminal to be traced comprises means for receiving 313 the terminal trace.

It should be noted that even if the term eNode B is used, the present invention is applicable to all radio base stations having a similar functionality as the eNode Bs in the eUTRAN. Thus the present invention is not limited to eUTRAN but can be used in any radio access network having a similar architecture as the eUTRAN.

The above described embodiments of the invention are intended to be examples only. Alterations, modification, and variations may be effected to particular embodiments by those skilled in the art without departing from the scope of the invention, which is defined by the accompanying claims.

## Claims

1. A radio access network domain manager (130), RAN DM, for a mobile telecommunications network comprising a plurality of eNodeBs (100) connected to CN nodes (110) configured to activate a terminal trace of a terminal to be traced, wherein a first terminal identity not known by the eNodeBs is used to identify the terminal to be traced, charcterised in that the RAN DM comprises means for selecting (201) a first eNode B (100) independently of the location of the terminal (120) to be traced and means for sending (202) a terminal trace request comprising the first terminal identity for the terminal to be traced to the first eNodeB, for forwarding the terminal trace request to a CN node, which CN node is arranged to store information relating to the trace request in a global manner and to control the first eNode B and a second eNode B that is arranged to control the terminal to be traced.

2. The RAN DM according claim 1, wherein the request comprises a second terminal identity that can be used by the eNode Bs to be piggy backed in a message from the CN node to the second eNode B .

3. The RAN DM according to any of the previous claims 1-2, wherein the first terminal identity is an IMSI.

4. The RAN DM according to any of the previous claims 2-3, wherein the second terminal identity is a trace reference.

5. The RAN DM according to any of the previous claims 1-4, wherein it comprises means for preconfiguring the selection of the first eNode B.

6. The RAN DM according to any of the previous claims 1-4, wherein it comprises means for dynamically scanning eNodeBs and selecting the first eNode B for said CN node.

7. A Core Network (110), CN, node comprising an interface for connection to a plurality of eNodeBs in a mobile telecommunications network wherein the CN node is configured to activate a terminal trace of a terminal (120) to be traced, and wherein the terminal (120) is identified by a first terminal identity not known by the eNodeBs, **characterised in that** the CN node comprises means for receiving a terminal trace request for the terminal to be traced from a radio network domain manager, RAN DM, via a first eNodeB that is selected independently of the location of the terminal to be traced, a trace information storage configured to globally store terminal trace related information such that a trace can be activated on any eNode B that is connected to said CN node, means for receiving an identity of a second eNode B that is controlling the terminal to be traced, and means for sending the terminal trace request to the second eNodeB, such that the second eNode B can perform the terminal trace.

8. The CN node according to claim 7, wherein the CN node is a Mobility Management Entity.

9. The CN node according to any of claims 7-8, wherein the request received from the RAN DM via the first eNode B comprises a second terminal identity that can be used by the eNode Bs to be piggy backed in a message from the CN node to the second eNode B.

10. The CN node according to claim 9, wherein it comprises means for creating the second terminal identity that can be used by the eNode Bs to be piggy backed in a message from the CN node to the second eNode B.

11. The CN node according to any of the previous claims 7-10, wherein it comprises means for obtaining information of the identity of the second eNode B when the terminal to be traced performs a call set up.

12. A method for a radio access network domain manager (130), RAN DM, in a mobile telecommunications network comprising a plurality of eNodeBs (100) connected to CN nodes for activating a terminal trace of a terminal to be traced, wherein a first terminal identity not known by the eNodeBs is used to identify the terminal to be traced, charcterised in that the method comprises the steps of:
- selecting (201) a first eNode B independently of the location of the terminal to be traced, and
- sending (202) a terminal trace request comprising the first terminal identity for the terminal to be traced to the first eNodeB, for forwarding the terminal trace request to a CN node, which CN node is storing information relating to the trace request in a global manner and controlling the first eNode B and a second eNode B that is controlling the terminal to be traced.

13. The method according to claim 12, wherein the request comprises a second terminal identity that can be used by the eNode Bs to be piggy backed in a message from the CN node to the second eNode B.

14. The method according to any of the previous claims 12-13, wherein the selection step comprises the step of preconfiguring the selection of the first eNode B.

15. The method according to any of the previous claims 12-14, wherein the selection step comprises the step for dynamically scanning eNodeBs and selecting the first eNode B for said CN node.

16. A method in a Core Network (110), CN, node of a mobile telecommunications network comprising a plurality of eNodeBs (100) connected to the CN node configured to activate a terminal trace of a terminal (120) to be traced, wherein the terminal is identified by a first terminal identity not known by the eNodeBs, **characterised in that** the method comprises the step of:
- receiving (206) a terminal trace request for the terminal to be traced from a radio network domain manager, RAN DM, via a first eNodeB that is selected independently of the location of the terminal to be traced,
- storing (207) terminal trace related information globally such that a trace can be activated on any eNode B that is connected to said CN node,
- receiving (208/209) an identity of a second eNode B that is controlling the terminal to be traced, and
- sending (210) the terminal trace request to the second eNodeB, such that the second eNode B can perform the terminal trace.

17. The method according to claim 16, wherein the CN node is a Mobility Management Entity.

18. The method node according to any of claims 16-17, wherein the request received from the RAN DM via the first eNode B comprises a second terminal identity that can be used by the eNode Bs to be piggy backed in a message from the CN node to the second eNode B.

19. The method according to claim 18, wherein it comprises the step of creating the second terminal identity that can be used by the eNode Bs to be piggy backed in a message from the CN node to the second eNode B.

20. The method according to any of the previous claims 16-19, wherein the identity of the second eNode B is received when the terminal to be traced performs a call set up.

## Patentansprüche

1. Funkzugangsnetz-Domänenmanager (130), RAN DM, für ein Mobil-Telekommunikationsnetzwerk, das eine Vielzahl von mit CN-Knoten (110) verbundenen eNodeBs (100) umfasst, die dafür konfiguriert sind, eine Endgeräteverfolgung eines zu verfolgenden Endgeräts zu aktivieren, worin eine den eNodeBs nicht bekannte erste Endgeräteidentität verwendet wird, um das zu verfolgende Endgerät zu identifizieren, **dadurch gekennzeichnet, dass** der RAN DM umfasst: ein Mittel zum Auswählen (201) eines ersten eNodeB (100), unabhängig vom Standort des zu verfolgenden Endgeräts (120), und ein Mittel zum Senden (202) einer Endgeräteverfolgungsanfrage, welche die erste Endgeräteidentität für das zu verfolgende Endgerät umfasst, an den ersten eNodeB, zur Weiterleitung der Endgeräteverfolgungsanfrage zu einem CN-Knoten, wobei dieser CN-Knoten dafür eingerichtet ist, Information bezüglich der Verfolgungsanfrage auf eine globale Weise zu speichern und den ersten eNodeB und einen zweiten eNodeB, der dafür eingerichtet ist, das zu verfolgende Endgerät zu steuern, zu steuern.

2. RAN DM nach Anspruch 1, worin die Anfrage eine zweite Endgeräteidentität umfasst, die durch die eNodeBs verwendet werden kann, um in einer Nachricht vom CN-Knoten an den zweiten eNodeB huckepack transportiert zu werden.

3. RAN DM nach einem der vorigen Ansprüche 1 bis 2, worin die erste Endgeräteidentität eine IMSI ist.

4. RAN DM nach einem der vorigen Ansprüche 2 bis 3, worin die zweite Endgeräteidentität eine Verfolgungsreferenz ist.

5. RAN DM nach einem der vorigen Ansprüche 1 bis 4, worin er ein Mittel zum Vorkonfigurieren der Auswahl des ersten eNodeB umfasst.

6. RAN DM nach einem der vorigen Ansprüche 1 bis 4, worin er ein Mittel zum dynamischen Scannen von eNodeBs und Auswählen des ersten eNodeB für den CN-Knoten umfasst.

7. Kernnetzwerk-(CN-)Knoten (110), umfassend eine Schnittstelle zur Verbindung mit einer Vielzahl von eNodeBs in einem Mobil-Telekommunikationsnetzwerk, worin der CN-Knoten dafür konfiguriert ist, eine Endgeräteverfolgung eines zu verfolgenden Endgeräts (120) zu aktivieren, und worin das Endgerät (120) durch eine den eNodeBs nicht bekannte erste Endgeräteidentität identifiziert wird, **dadurch gekennzeichnet, dass** der CN-Knoten umfasst: ein Mittel zum Empfangen einer Endgeräteverfolgungsanfrage für das zu verfolgende Endgerät von einem Funkzugangsnetz-Domänenmanager, RAN DM, über einen ersten eNodeB, der unabhängig vom Standort des zu verfolgenden Endgeräts ausgewählt wird; einen Verfolgungsinformationsspeicher, der dafür konfiguriert ist, endgeräteverfolgungsbezogene Information global zu speichern, sodass eine Verfolgung auf jedem eNodeB aktiviert werden kann, der mit dem CN-Knoten verbunden ist; ein Mittel zum Empfangen einer Identität eines zweiten eNodeB, der das zu verfolgende Endgerät steuert; und ein Mittel zum Senden der Endgeräteverfolgungsanfrage an den zweiten eNodeB, sodass der zweite eNodeB die Endgeräteverfolgung durchführen kann.

8. CN-Knoten nach Anspruch 7, worin der CN-Knoten eine Mobilitätsmanagementinstanz ist.

9. CN-Knoten nach einem der Ansprüche 7 bis 8, worin die vom RAN DM über den ersten eNodeB empfangene Anfrage eine zweite Endgeräteidentität umfasst, die durch die eNodeBs verwendet werden kann, um in einer Nachricht vom CN-Knoten an den zweiten eNodeB huckepack transportiert zu werden.

10. CN-Knoten nach Anspruch 9, worin er ein Mittel zum Erzeugen der zweiten Endgeräteidentität umfasst, die durch die eNodeBs verwendet werden kann, um in einer Nachricht vom CN-Knoten an den zweiten eNodeB huckepack transportiert zu werden.

11. CN-Knoten nach einem der vorigen Ansprüche 7 bis 10, worin er ein Mittel zum Erlangen von Information über die Identität des zweiten eNodeB, wenn das zu verfolgende Endgerät einen Verbindungsaufbau durchführt, umfasst.

12. Verfahren für einen Funkzugangsnetz-Domänenmanager (130), RAN DM, in einem Mobil-Telekommunikationsnetzwerk, das eine Vielzahl von mit CN-Knoten verbundenen eNodeBs (100) zum Aktivieren einer Endgeräteverfolgung eines zu verfolgenden Endgeräts umfasst, worin eine den eNodeBs nicht bekannte erste Endgeräteidentität verwendet wird, um das zu verfolgende Endgerät zu identifizieren, **dadurch gekennzeichnet, dass** das Verfahren die Schritte umfasst:
- Auswählen (201) eines ersten eNodeB, unabhängig vom Standort des zu verfolgenden Endgeräts, und
- Senden (202) einer Endgeräteverfolgungsanfrage, welche die erste Endgeräteidentität für das zu verfolgende Endgerät umfasst, an den ersten eNodeB, zur Weiterleitung der Endgeräteverfolgungsanfrage zu einem CN-Knoten, wobei dieser CN-Knoten Information bezüglich der Verfolgungsanfrage auf eine globale Weise speichert und den ersten eNodeB und einen zweiten eNodeB, der das zu verfolgende Endgerät steuert, steuert.

13. Verfahren nach Anspruch 12, worin die Anfrage eine zweite Endgeräteidentität umfasst, die durch die eNodeBs verwendet werden kann, um in einer Nachricht vom CN-Knoten an den zweiten eNodeB huckepack transportiert zu werden.

14. Verfahren nach einem der vorigen Ansprüche 12 bis 13, worin der Auswahlschritt den Schritt umfasst: Vorkonfigurieren der Auswahl des ersten eNodeB.

15. Verfahren nach einem der vorigen Ansprüche 12 bis 14, worin der Auswahlschritt den Schritt umfasst: dynamisches Scannen von eNodeBs und Auswählen des ersten eNodeB für den CN-Knoten.

16. Verfahren in einem Kernnetzwerk-(CN-)Knoten (110) eines Mobil-Telekommunikationsnetzwerks, das eine Vielzahl von mit dem CN-Knoten verbundenen eNodeBs (100) umfasst, die dafür konfiguriert sind, eine Endgeräteverfolgung eines zu verfolgenden Endgeräts (120) zu aktivieren, worin das Endgerät durch eine den eNodeBs nicht bekannte erste Endgeräteidentität identifiziert wird, **dadurch gekennzeichnet, dass** das Verfahren die Schritte umfasst:
- Empfangen (206) einer Endgeräteverfolgungsanfrage für das zu verfolgende Endgerät von einem Funkzugangsnetz-Domänenmanager, RAN DM, über einen ersten eNodeB, der unabhängig vom Standort des zu verfolgenden Endgeräts ausgewählt wird,
- globales Speichern (207) von endgeräteverfolgungsbezogener Information, sodass eine Verfolgung auf jedem eNodeB aktiviert werden kann, der mit dem CN-Knoten verbunden ist,
- Empfangen (208/209) einer Identität eines zweiten eNodeB, der das zu verfolgende Endgerät steuert, und
- Senden (210) der Endgeräteverfolgungsanfrage an den zweiten eNodeB, sodass der zweite eNodeB die Endgeräteverfolgung durchführen kann.

17. Verfahren nach Anspruch 16, worin der CN-Knoten eine Mobilitätsmanagementinstanz ist.

18. Verfahren nach einem der Ansprüche 16 bis 17, worin die vom RAN DM über den ersten eNodeB empfangene Anfrage eine zweite Endgeräteidentität umfasst, die durch die eNodeBs verwendet werden kann, um in einer Nachricht vom CN-Knoten an den zweiten eNodeB huckepack transportiert zu werden.

19. Verfahren nach Anspruch 18, worin es den Schritt umfasst: Erzeugen der zweiten Endgeräteidentität, die durch die eNodeBs verwendet werden kann, um in einer Nachricht vom CN-Knoten an den zweiten eNodeB huckepack transportiert zu werden.

20. Verfahren nach einem der vorigen Ansprüche 16 bis 19, worin die Identität des zweiten eNodeB empfangen wird, wenn das zu verfolgende Endgerät einen Verbindungsaufbau durchführt.

## Revendications

1. Gestionnaire de domaine de réseau d'accès radio (130), RAN DM, pour un réseau de télécommunication mobile comprenant une pluralité de stations « eNode B » (100) connectées à des noeuds de réseau CN (110) configurés de manière à activer un suivi de terminal d'un terminal devant être suivi, dans lequel une première identité de terminal inconnue des stations « eNode B » est utilisée en vue d'identifier le terminal devant être suivi, **caractérisé en ce que** le gestionnaire RAN DM comprend un moyen pour sélectionner (201) une première station « eNode B » (100) indépendamment de l'emplacement du terminal (120) devant être suivi, et un moyen pour envoyer (202) une demande de suivi de terminal comprenant la première identité de terminal pour le terminal devant être suivi à la première station « eNode B », pour acheminer la demande de suivi de terminal à un noeud de réseau CN, lequel noeud de réseau CN est agencé de manière à stocker des informations connexes à la demande de suivi d'une manière globale, et à commander la première station « eNode B » et une seconde station « eNode B » qui est agencée de manière à commander le terminal devant être suivi.

2. Gestionnaire RAN DM selon la revendication 1, dans lequel la demande comprend une seconde identité de terminal qui peut être utilisée par les stations « eNode B » de manière à être greffée dans un message du noeud de réseau CN à la seconde station « eNode B ».

3. Gestionnaire RAN DM selon l'une quelconque des revendications précédentes 1 à 2, dans lequel la première identité de terminal est une identité IMSI.

4. Gestionnaire RAN DM selon l'une quelconque des revendications précédentes 2 à 3, dans lequel la seconde identité de terminal est une référence de suivi.

5. Gestionnaire RAN DM selon l'une quelconque des revendications précédentes 1 à 4, dans lequel il comprend un moyen pour préconfigurer la sélection de la première station « eNode B ».

6. Gestionnaire RAN DM selon l'une quelconque des revendications précédentes 1 à 4, dans lequel il comprend un moyen pour balayer de manière dynamique des stations « eNode B » et pour sélectionner la première station « eNode B » pour ledit noeud de réseau CN.

7. Noeud de réseau fédérateur (110), CN, comprenant une interface en vue d'une connexion à une pluralité de stations « eNode B » dans un réseau de télécommunication mobile, dans lequel le noeud de réseau CN est configuré de manière à activer un suivi de terminal d'un terminal (120) devant être suivi, et dans lequel le terminal (120) est identifié par une première identité de terminal inconnue des stations « eNode B », **caractérisé en ce que** le noeud de réseau CN comprend un moyen pour recevoir une demande de suivi de terminal, pour le terminal devant être suivi, en provenance d'un gestionnaire de domaine de réseau d'accès radio, RAN DM, par l'intermédiaire d'une première station « eNode B » qui est sélectionnée indépendamment de l'emplacement du terminal devant être suivi, un magasin de stockage d'informations de suivi configuré de manière à stocker globalement des informations connexes à un suivi de terminal, de sorte qu'un suivi peut être activé sur une quelconque station « eNode B » qui est connectée audit noeud de réseau CN, un moyen pour recevoir une identité d'une seconde station « eNode B » qui commande le terminal devant être suivi, et un moyen pour envoyer la demande de suivi de terminal à la seconde station « eNode B », de sorte que la seconde station « eNode B » peut mettre en oeuvre le suivi de terminal.

8. Noeud de réseau CN selon la revendication 7, dans lequel le noeud de réseau CN est une entité de gestion de la mobilité.

9. Noeud de réseau CN selon l'une quelconque des revendications 7 à 8, dans lequel la demande reçue à partir du gestionnaire RAN DM par l'intermédiaire de la première station « eNode B » comprend une seconde identité de terminal qui peut être utilisée par les stations « eNode B » de manière à être greffée dans un message du noeud de réseau CN à la seconde station « eNode B ».

10. Noeud de réseau CN selon la revendication 9, dans lequel is comprend un moyen pour créer la seconde identité de terminal qui peut être utilisée par les stations « eNode B » de manière à être greffée dans un message du noeud de réseau CN à la seconde station « eNode B ».

11. Noeud de réseau CN selon l'une quelconque des revendications précédentes 7 à 10, dans lequel il comprend un moyen pour obtenir des informations sur l'identité de la seconde station « eNode B » lorsque le terminal devant être suivi met en oeuvre un établissement d'appel.

12. Procédé pour un gestionnaire de domaine de réseau d'accès radio (130), RAN DM, dans un réseau de télécommunication mobile comprenant une pluralité de stations « eNode B » (100) connectées à des noeuds de réseau CN pour activer un suivi de terminal d'un terminal devant être suivi, dans lequel une première identité de terminal inconnue des stations « eNode B » est utilisée en vue d'identifier le terminal devant être suivi, **caractérisé en ce que** le procédé comporte les étapes ci-dessous consistant à :
- sélectionner (201) une première station « eNode B » indépendamment de l'emplacement du terminal devant être suivi ; et
- envoyer (202) une demande de suivi de terminal comprenant la première identité de terminal pour le terminal devant être suivi à la première station « eNode B », pour acheminer la demande de suivi de terminal à un noeud de réseau CN, lequel noeud de réseau CN stocke des informations connexes à la demande de suivi d'une manière globale et commande la première station « eNode B » et une seconde station « eNode B » laquelle commande le terminal devant être suivi.

13. Procédé selon la revendication 12, dans lequel la demande comprend une seconde identité de terminal qui peut être utilisée par les stations « eNode B » de manière à être greffée dans un message du noeud de réseau CN à la seconde station « eNode B ».

14. Procédé selon l'une quelconque des revendications précédentes 12 à 13, dans lequel l'étape de sélection comprend l'étape consistant à préconfigurer la sélection de la première station « eNode B ».

15. Procédé selon l'une quelconque des revendications précédentes 12 à 14, dans lequel l'étape de sélection comprend l'étape consistant à balayer de manière dynamique des stations « eNode B » et à sélectionner la première station « eNode B » pour ledit noeud de réseau CN.

16. Procédé mis en oeuvre dans un noeud de réseau fédérateur (110), CN, d'un réseau de télécommunication mobile comprenant une pluralité de stations « eNode B » (100) connectées au noeud de réseau CN configurées de manière à activer un suivi de terminal d'un terminal (120) devant être suivi, dans lequel le terminal est identifié par une première identité de terminal inconnue des stations « eNode B », **caractérisé en ce que** le procédé comprend les étapes ci-dessous consistant à :
- recevoir (206) une demande de suivi de terminal, pour le terminal devant être suivi, en provenance d'un gestionnaire de domaine de réseau d'accès radio, RAN DM, par l'intermédiaire d'une première station « eNode B » qui est sélectionnée indépendamment de l'emplacement du terminal devant être suivi ;
- stocker (207) des informations connexes à un suivi de terminal, globalement, de sorte qu'un suivi peut être activé sur une quelconque station « eNode B » qui est connectée audit noeud de réseau CN ;
- recevoir (208 / 209) une identité d'une seconde station « eNode B » qui commande le terminal devant être suivi ; et
- envoyer (210) la demande de suivi de terminal à la seconde station « eNode B », de sorte que la seconde station « eNode B » peut mettre en oeuvre le suivi de terminal.

17. Procédé selon la revendication 16, dans lequel le noeud de réseau CN est une entité de gestion de la mobilité.

18. Procédé selon l'une quelconque des revendications 16 à 17, dans lequel la demande reçue à partir du gestionnaire RAN DM par l'intermédiaire de la première station « eNode B » comporte une seconde identité de terminal qui peut être utilisée par les stations « eNode B » de manière à être greffée dans un message du noeud de réseau CN à la seconde station « eNode B ».

19. Procédé selon la revendication 18, dans lequel il comprend l'étape consistant à créer la seconde identité de terminal qui peut être utilisée par les stations « eNode B » de manière à être greffée dans un message du noeud de réseau CN à la seconde station « eNode B ».

20. Procédé selon l'une quelconque des revendications précédentes 16 à 19, dans lequel l'identité de la seconde station « eNode B » est reçue lorsque le terminal devant être suivi met en oeuvre un établissement d'appel.
